# EUROPÄISCHE PATENTSCHRIFT

(11) **EP 2 235 396 B1**
(45) Veröffentlichungstag und Bekanntmachung des Hinweises auf die Patenterteilung: **19.06.2013**
(21) Anmeldenummer: 09705785.5
(22) Anmeldetag: 30.01.2009
(51) Int. Cl.: F16G 13/16, H02G 11/00

(54) **SYSTEM MIT SICHERHEITSABSCHALTUNG**
SYSTEM WITH SAFETY SHUT-OFF
SYSTEME A DEBRANCHEMENT DE SECURITE

(30) Priorität: 31.01.2008 DE 202008001415 U
(43) Veröffentlichungstag der Anmeldung: 06.10.2010
(73) Patentinhaber: Tsubaki Kabelschlepp GmbH, 57482 Wenden-Gerlingen (DE)
(72) Erfinder: WULFLEFF, Christine, 57250 Netphen (DE); WENDIG, Thomas, 57581 Katzwinkel/Elkhausen (DE); SCHÖLER, Dirk, 57234 Wilnsdorf (DE); KEMPER, Uwe, 57223 Kreuztal (DE); SAMEN, Heiner, 51709 Marienheide (DE); BENSBERG, Jochen, 57271 Hilchenbach (DE); BAUMANN, Axel, 57258 Freudenberg (DE); KUHLMANN, Dirk, 57271 Hilchenbach (DE); SCHRATTER, Wolfgang, 54687 Arzfeld (DE)
(74) Vertreter: Neumann, Ditmar
(86) Internationale Anmeldenummer: PCT/EP2009/051063
(87) Internationale Veröffentlichungsnummer: WO 2009/095470

(56) Entgegenhaltungen:
- WO-A-2004/090375
- DE-A1- 19 532 939
- DE-A1- 19 710 450

## Beschreibung

Der Gegenstand der Erfindung bezieht sich auf ein System, umfassend wenigstens eine Energieführungseinheit zum Führen von Kabeln, Leitungen, Schläuchen oder dergleichen zwischen einem ortsfesten und einem beweglichen Anschlussbereich unter Ausbildung eines Krümmungsbereichs, wobei die Energieführungseinheit mit einem Mitnehmer verbunden ist.

Energieführungseinheiten werden in verschiedenen Apparaten, Maschinen, Einrichtungen oder Anlagen eingesetzt, insbesondere dort, wo es erforderlich ist, Verbrauchsmittel, Energie oder dergleichen, mittels Leitungen, Schläuchen oder dergleichen von einem ortsfesten Anschluss zu einem beweglichen Anschluss eines Verbrauches zu transportieren. Die Energieführungseinheit kann ein- oder mehrsträngig sein.

Es sind unterschiedliche Ausgestaltungen einer Energieführungseinheit bekannt zum Beispiel WO 2004/090375 und DE 19532939. Die Energieführungseinheit kann beispielsweise aus einzelnen Kettengliedern gebildet sein. Die Kettenglieder sind gelenkig miteinander verbunden. Eine solche Energieführungseinheit wird auch als Energieführungskette oder verkürzt Energiekette bezeichnet. Eine Energieführungseinheit im Sinne der Erfindung kann auch ein Schlauch, ein Wellrohr oder der gleichen sein.

Der Einsatzbereich einer Energieführungseinheit ist breit gefächert. Energieführungseinheiten werden beispielsweise für Krananlagen verwendet. Hierbei müssen die Energieführungseinheiten insbesondere für lange Verfahrwege geeignet sein. Es ist bekannt, dass eine Energieführungseinheit in einem Führungskanal geführt wird. Es sind Führungskanäle bekannt, die geschlossen sind, so dass ein Schutz gegen äußere Einwirkungen auf die Energieführungseinheit gegeben ist.

Problematisch ist insbesondere bei Energieführungseinheiten, welche gegen äußere Einwirkungen nicht geschützt sind, dass eine Beschädigungsgefahr des Energieführungssystems und/oder der über den Mitnehmer verbundenen Einrichtung, Maschine oder dergleichen besteht. Diese Gefahr wird noch weiter dadurch erhöht, wenn der Bremsweg der Energieführungseinheit kleiner als der Bremsweg des über den Mitnehmer verbundenen Teils der Anlage, Vorrichtung oder dergleichen ist. Hierbei kann es zu Beschädigungen des Systems und/oder des Apparates, Maschine, Einrichtung oder Anlage kommen.

Hiervon ausgehend liegt der vorliegenden Erfindung die Zielsetzung zugrunde, ein System anzugeben, bei dem die Beschädigungsgefahr verringert wird.

Diese Aufgabe wird erfindungsgemäß durch ein System mit den Merkmalen des Anspruchs 1 oder 2 gelöst. Vorteilhafte Weiterbildungen und Ausgestaltungen des Systems sind Gegenstand der Unteransprüche.

Das erfindungsgemäße System umfasst wenigstens eine Energieführungseinheit und einen mit der Energieführungseinheit verbundenen Mitnehmer. Das erfindungsgemäße System zeichnet sich dadurch aus, dass der Mitnehmer mittels einer Kopplungseinrichtung lösbar mit der Energieführungseinheit verbunden ist, wobei die Verbindung in Abhängigkeit von den auf die Verbindung einwirkenden Kräften selbsttätig, insbesondere automatisch gelöst wird.

Durch diese erfindungsgemäße Ausgestaltung des Systems wird eine Beschädigungsgefahr des Systems oder des mit dem System verbundenen Anlage, Maschine, Apparat oder Einrichtung verringert. Es wird eine Entkopplung des Systems von der Maschine oder des über den Mitnehmer verbundenen Maschinenteils erreicht, wenn eine auf die Verbindung einwirkende Kraft wenigstens einen bestimmten Grenzwert erreicht hat.

Hierbei wird durch die erfindungsgemäße Ausgestaltung des Systems auch erreicht, dass unterschiedliche Bremswege des Systems und der Maschine, Anlage oder dergleichen, berücksichtigt sind.

Nach einem anderen erfinderischen Gedanken wird ein System umfassen eine Anlage mit einem verfahrbaren Bauteil und einem Energieführungssystem vorgeschlagen, wobei das Energieführungssystem wenigstens eine Energieführungseinheit aufweist, die mit dem Bauteil über wenigstens einen Mitnehmer verbunden ist. Der Mitnehmer ist mittels einer Kopplungseinrichtung lösbar mit dem Bauteil verbunden, wobei die Verbindung in Abhängigkeit von den auf die Verbindung einwirkenden Kräften selbsttätig, insbesondere automatisch gelöst wird.

Im Folgenden wird der Gegenstand der Erfindung anhand der Verwendung in Verbindung mit einer Krananlage beschrieben, ohne dass der Gegenstand der Erfindung auf solche Krananlagen beschränkt wird. Der Einsatzbereich des erfindungsgemäßen Systems ist sehr breit. Das erfindungsgemäße System kann überall dort eingesetzt werden, wo die Gefahr besteht, dass beispielsweise Gegenstände in den Verfahrweg der Energieführungseinheit gelangen können.

Gelangt beispielsweise ein Gegenstand in den Verfahrweg der Energieführungseinheit, so kann es zu einer Blockade der Energieführungseinheit kommen. Die hierdurch bedingte Erhöhung der Kraft, die auf den Mitnehmer wirkt, wird vorzugsweise mittels einer Kraftmesseinrichtung gemessen. Bei der Kraftmesseinrichtung kann es sich beispielsweise um Dehnungsmessstreifen oder eine Kraftmessdose handeln. Die Kraftmesseinrichtung ist nicht zwingend notwendig. Es besteht die Möglichkeit, dass der Mitnehmer beispielsweise über ein Zwischenglied mit der Energieführungseinheit verbunden ist, wobei das Zwischenglied so ausgebildet ist, dass es eine Sollbruchstelle aufweist, welche beim Auftreten einer bestimmten Kraft zu einem Bruch führt. Das Zwischenglied kann mehrteilig ausgebildet sein, so dass sowohl im Zug- als auch im Druckbetrieb der Energieführungseinheit jeweils die Möglichkeit gegeben ist, einen Bruch des Zwischengliedes zu erreichen, wenn die Kraft im Zug- oder Druckbetrieb einen vorgegebenen Grenzwert überschritten hat. Die Kopplungseinrichtung kann so ausgebildet sein, dass diese eine kraftschlüssige Verbindung zwischen dem Mitnehmer und der Energieführungseinheit herstellt, wobei diese Verbindung unter Krafteinwirkung gelöst wird.

Die Verwendung einer Kraftmesseinrichtung wird jedoch bevorzugt.

Die Kopplungseinrichtung kann vorzugsweise eine Löseeinheit aufweisen. Die Löseeinheit kann elektrisch, elektromagnetisch oder mechanisch betätigbar sein. Der Vorteil einer solchen Ausgestaltung des erfindungsgemäßen Systems kann darin gesehen werden, dass nach Beseitigung der Störgröße eine Kopplung wieder erreicht werden kann, ohne dass Bauteile des Systems und/oder der Anlage beschädigt werden.

Besonders bevorzugt ist eine Ausgestaltung des Systems, bei der die Löseeinheit und die Kraftmesseinrichtung mit einer Steuereinrichtung signaltechnisch verbunden sind. Die Steuereinrichtung kann wenigstens einen Speicher und einen Mikroprozessor aufweisen. Eine solche Ausgestaltung des Systems hat auch den Vorteil, dass für den Zug- und/oder den Druckbetrieb jeweils ein Kraftfeld vorgegeben sein kann. Liegt die gemessene Kraft innerhalb des Kraftfeldes, so liegt keine Störung des Systems vor. Liegt die gemessene Kraft außerhalb des vorgegebenen Kraftfeldes, so wird eine Störung festgestellt und der Entkopplungsvorgang eingeleitet. Hierbei kann die Kraft, welche gemessen wird, oberhalb des Kraftfeldes liegen. Dies wäre ein Indiz dafür, dass sich beispielsweise ein Gegenstand im Verfahrweg der Energieführungseinheit befindet. Es besteht auch die Möglichkeit, dass die gemessene Kraft außerhalb des Toleranzfeldes liegt, da diese geringer ist, als ein unterer Grenzwert des Kraftfeldes. Auch in einem solchen Fall kann eine Entkopplung des Systems von der Anlage erreicht werden.

Eine solche Ausgestaltung des Systems hat auch den Vorteil, dass eine automatische Entkoppelung erreicht wird, wenn eine Störgröße auftritt. Dies kann beispielsweise dann der Fall sein, wenn sich die Energieführungseinheit in einem Führungskanal aufbäumt und gegen eine Begrenzung des Kanals stößt. Die Kraftmessung kann kontinuierlich oder diskontinuierlich erfolgen. Aus der gemessenen Kraft kann eine Kenngröße für eine Störung des Systems abgeleitet werden, die mit einer Vergleichsgröße verglichen wird. Führt der Vergleich zu dem Ergebnis, dass ein vorgegebener Toleranzwert über- oder unterschritten wird, so kann wenigstens ein Warnhinweis ausgegeben werden. Die Kenngröße wird vorzugsweise in vorgegebenen Zeitintervallen erneut bestimmt. Aus der zeitlichen Veränderung der Kenngröße kann eine Aussage über den Zustand der Energieführungseinheit getroffen werden, so dass die Kenngröße auch als Indikator für beispielsweise einen Verschleiß der Energieführungseinheit genutzt werden kann.

Gemäß einer noch weiteren vorteilhaften Ausgestaltung des erfindungsgemäßen Systems wird vorgeschlagen, dass wenigstens eine Reserve-Energieführungseinheit vorgesehen ist, welche mit dem Mitnehmer verbunden ist. In der Reserve-Energieführungseinheit werden die für den Betrieb der Anlage notwendigen Leitungen, geführt. Die Reserve-Energieführungseinheit tritt dann in Aktion, wenn eine Entkopplung des Systems von der Anlage erfolgt ist. Hierdurch wird erreicht, dass während des Bremsvorgangs der Anlage eine Versorgung der Anlage zum koordinierten Abschalten der Anlage erreicht wird. Die Länge der Reserve- Energieführungseinheit ist so bemessen, dass diese ausreichend ist, um die Verbindung mit der Anlage über den gesamten Bremsweg der Anlage sicher zu stellen.

Bevorzugt ist dabei eine Ausgestaltung des Systems, bei dem die Reserve-Energieführungseinheit in einem Tragkorb angeordnet ist. Der Tragkorb ist mittelbar oder unmittelbar mit der Energieführungseinheit verbunden. Besonders bevorzugt ist dabei eine Ausgestaltung, bei der der Tragkorb mittelbar oder unmittelbar mit dem Mitnehmer verbunden ist. Der Tragkorb ist vorzugsweise auch mit der Kopplungseinrichtung verbunden, so dass im Falle der Trennung der Energieführungseinheit vom Mitnehmer die Verbindung zwischen der Reserve-Energieführungseinheit und dem Mitnehmer weiter fort besteht.

Nach einer noch weiteren vorteilhaften Ausgestaltung des erfindungsgemäßen Systems wird vorgeschlagen, dass wenigstens eine Bremseinrichtung vorgesehen ist, welche mit der Energieführungseinheit zusammenwirkt. Kommt es zu einer Entkopplung zwischen der Energieführungseinheit und der Anlage, so wird die Bremseinrichtung aktiviert, wodurch es zu einer Abbremsung der Energieführungseinheit kommt. Die Bremseinrichtung kann eine mechanische Bremseinrichtung sein. Besonders bevorzugt ist dabei eine Ausgestaltung des Systems, bei dem die Bremseinrichtung mit der Kopplungseinrichtung verbunden ist. Kommt es zu einer Entkopplung der Energieführungseinheit, so wird die Bremseinrichtung durch die Kupplungseinrichtung aktiviert.

Die Bremseinrichtung kann auch eine elektrische oder elektromagnetische Bremseinrichtung sein. Diese ist vorzugsweise mit der Steuereinrichtung signaltechnisch verbunden. Wird durch die Steuereinrichtung der Entkopplungsvorgang eingeleitet, so kann zeitgleich oder verzögert die Bremsvorrichtung mittels der Steuereinrichtung aktiviert werden.

Gemäß einer noch weiteren vorteilhaften Ausgestaltung des Systems wird vorgeschlagen, dass ein Führungskanal vorgesehen ist, in dem die Energieführungseinheit geführt wird. Ein solcher Führungskanal wird insbesondere bei Energieführungseinheiten mit langen Verfahrwegen bevorzugt.

Ist eine Reserve-Energieführungseinheit vorgesehen, so ist es vorteilhaft, den Führungskanal so auszubilden, dass dieser eine Führung aufweist, mittels derer die Reserve-Energieführungseinheit führbar ist.

Weitere Vorteile und Einzelheiten des erfindungsgemäßen Systems werden anhand des in der Zeichnung dargestellten Ausführungsbeispiels erläutert, ohne dass der Gegenstand der Erfindung auf dieses konkrete Ausführungsbeispiel beschränkt wird.

Es zeigen:
- Figur 1:: schematisch ein Ausführungsbeispiel eines Systems in einer Seitenansicht,
- Figur 2:: schematisch das System nach Figur 1 im Zugbetrieb mit gelöstem Mitnehmer,
- Figur 3:: schematisch das System nach Figur 1 im Druckbetrieb mit gelöstem Mitnehmer und
- Figur 4:: schematisch und in einer perspektivischen Ansicht das System mit einem Führungskanal.

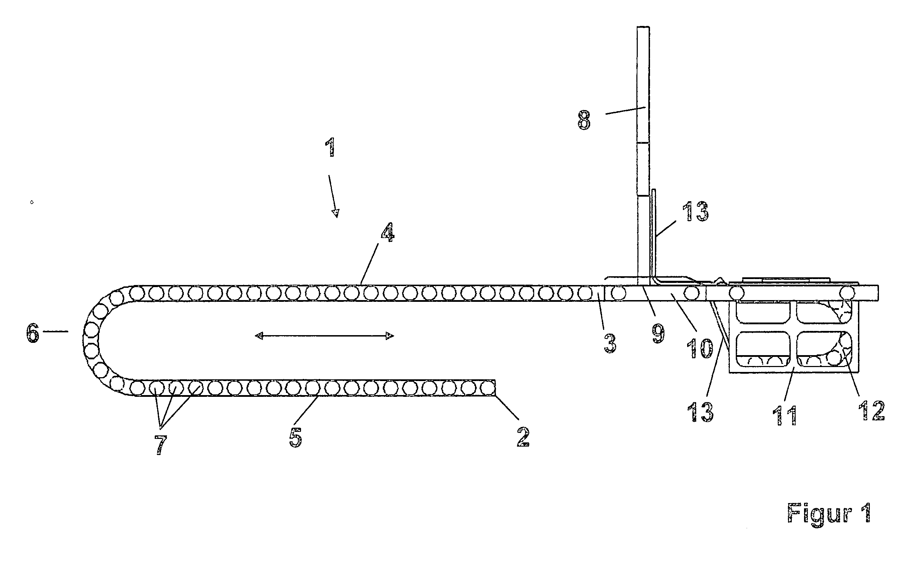

Figur 1 zeigt schematisch ein Ausführungsbeispiel eines erfindungsgemäßen Systems. Das System weist eine Energieführungseinheit 1 auf. Die Energieführungseinheit 1 ist gebildet durch gelenkig miteinander verbundene Glieder. Jedes Glied ist durch zwei Seitenlaschen und wenigstens einen die Seitenlaschen verbindenden Quersteg gebildet. Die Energieführungseinheit 1 weist einen ortsfesten Anschluss 2 und einen beweglichen Anschluss 3 auf. Aus der Darstellung nach Figur 1 ist ersichtlich, dass die Energieführungseinheit 1 einen Obertrum 4 und einen Untertrum 5 aufweist, die über einen Krümmungsbereich 6 miteinander verbunden sind. Durch die Pfeile der Figur 1 ist die Bewegungsrichtung der Energieführungseinheit 1 gekennzeichnet.

In dem dargestellten Ausführungsbeispiel weist die Energieführungseinheit 1 Rollen 7 auf, die mit einer nicht dargestellten Führung zusammenwirken, so dass die Reibungsverluste während der Bewegung der Energieführungseinheit gering gehalten werden. Dies ist insbesondere dann zweckmäßig, wenn der Verfahrweg der Energieführungseinheit relativ groß ist, was beispielsweise bei Krananlagen der Fall ist. Die Ausgestaltung der Rollen ist nicht zwingend notwendig. Es besteht auch die Möglichkeit, dass die Energieführungseinheit ohne Rollen ausgebildet ist. Diese kann beispielsweise zur Minimierung der Reibungskräfte Gleitschuhe aufweisen.

Mit der Energieführungseinheit 1 ist ein Mitnehmer 8 verbunden. Die Verbindung des Mitnehmers 8 erfolgt am beweglichen Anschluss 3 der Energieführungseinheit 1. Nicht dargestellt ist eine mit dem Mitnehmer 8 verbundene Anlage, Maschinenteil oder dergleichen, welches die Bewegung vollzieht.

Der Mitnehmer 8 ist mittels einer Kopplungseinrichtung 9 lösbar mit der Energieführungseinheit 1 verbunden. Die Verbindung des Mitnehmers mit der Energieführungseinheit kann in Abhängigkeit von den auf die Verbindung einwirkenden Kräften selbsttätig, insbesondere automatisch gelöst werden. Die Kopplungseinrichtung 9 weist vorzugsweise eine Löseeinheit auf, welche vorzugsweise elektromagnetisch betätigbar ist. Nicht dargestellt ist eine Kraftmesseinrichtung, welche die auf die Verbindung zwischen dem Mitnehmer und der Kopplungseinrichtung einwirkenden Kräfte misst. Bei der Kraftmesseinrichtung kann es sich beispielsweise um einen Dehnungsmessstreifen handeln. Die Kraftmesseinrichtung und die Löseeinheit sind mit einer nicht dargestellten Steuereinrichtung signaltechnisch verbunden.

Aus der Darstellung nach Figur 1 ist erkennbar, dass die Kopplungseinrichtung und vorzugsweise die Kraftmesseinrichtung an einem Tragwagen angeordnet sind, der mit dem beweglichen Anschluss der Energieführungseinheit 1 verbunden ist. Mit dem Tragwagen 10 ist eine Tragkorb 11 verbunden. In dem Tragkorb 11 ist eine Reserve-Energieführungseinheit 12 angeordnet. Mit dem Bezugszeichen 13 sind Leitungen gekennzeichnet, die von der nicht dargestellten Anlage über den Mitnehmer 8 zu der Reserve-Energieführungseinheit 12 geführt werden. Diese Leitungen sind des Weiteren in der Energiefuhrungseinheit 1 verlegt.

Der Tragwagen 10 weist vorzugsweise eine Bremseinrichtung auf, mittels derer die Bewegung des Tragwagens 10 und somit auch der Energieführungseinheit 1 verändert werden kann.

Befindet sich die Anlage in Betrieb, so bewegt sich der Mitnehmer 8 entlang der Bewegungsbahn der Energieführungseinheit 1. Bewegt sich der Mitnehmer 8 der Figur 1 nach rechts betrachtet, so befindet sich die Energieführungseinheit 1 im Zugbetrieb. Gerät ein Gegenstand in die Bewegungsbahn der Energieführungseinheit 1, so wird diese im Extremfall gestoppt. Dadurch, dass der Mitnehmer mit der Anlage weiter verfahren wird, tritt eine Kraft auf, welche beim Überschreiten eines Grenzwertes bewirkt, dass die Verbindung zwischen dem Mitnehmer 8 und der Energieführungseinheit 1, insbesondere der Kopplungseinrichtung 9, gelöst wird. Die Anlage wird abgebremst. Der Bremsweg ist an und für sich anlagenspezifisch und bekannt.

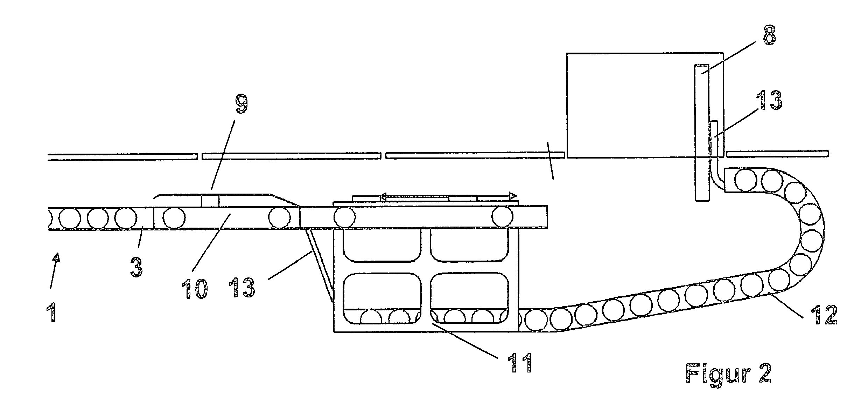

Figur 2 zeigt eine Situation, in der der Mitnehmer 8 von der Kopplungseinrichtung 9 gelöst ist und die Anlage mit dem Mitnehmer 8 abgebremst wurde. Aus der Darstellung nach Figur 2 ist ersichtlich, dass die Reserve-Energieführungseinheit 12 aus dem Tragkorb 11 heraus abgewickelt wurde. Die Länge der Reserve-Energieführungseinheit 12 ist so bemessen, dass diese ausreichend ist, um den Bremsweg der Anlage bei gestoppter Energieführungseinheit 1 zu überbrücken. Es findet kein Leitungsbruch statt, da die Reserve-Energieführungseinheit 12 die Leitungen 13, die zur Anlage führen, nicht auf Zug belastet werden.

Wird die Verbindung zwischen dem Mitnehmer 8 und der Kopplungseinrichtung 9 gelöst, so wird vorzugsweise gleichzeitig ein Bremsvorgang für die Energieführungseinheit 1 eingeleitet, wozu die nicht dargestellte Bremseinrichtung dient. Die Bremseinrichtung ist mit einer nicht dargestellten Steuereinrichtung signaltechnisch verbunden.

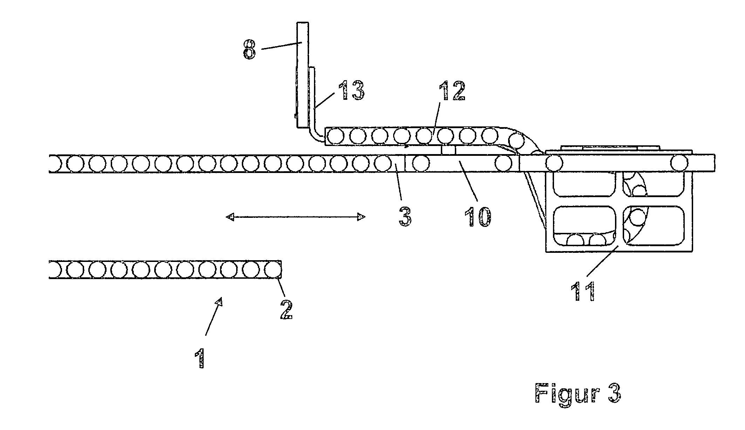

Figur 3 zeigt eine Situation, in der der Mitnehmer 8 im Druckbetrieb der Energieführungseinheit 1 von dieser getrennt worden ist. Die Anlage, welche mit dem Mitnehmer 8 verbunden ist, bewegt sich in Richtung der Energieführungseinheit 1, bis die Anlage und somit auch der Mitnehmer 8 abgebremst wird. Vorzugsweise wird die Energieführungseinheit 1 mittels einer nicht dargestellten Bremseinrichtung abgebremst, wenn dies erforderlich ist. Während der Bewegung des Mitnehmers 8 wird die Reserve-Energieführungseinheit 12 aus dem Tragkorb 11 herausbewegt. Die Länge der Reserve-Energieführungseinheit ist ausreichend, um die Verbindung der Leitungen 13 mit dem Mitnehmer für den Bremsweg der Anlage sicher zu stellen.

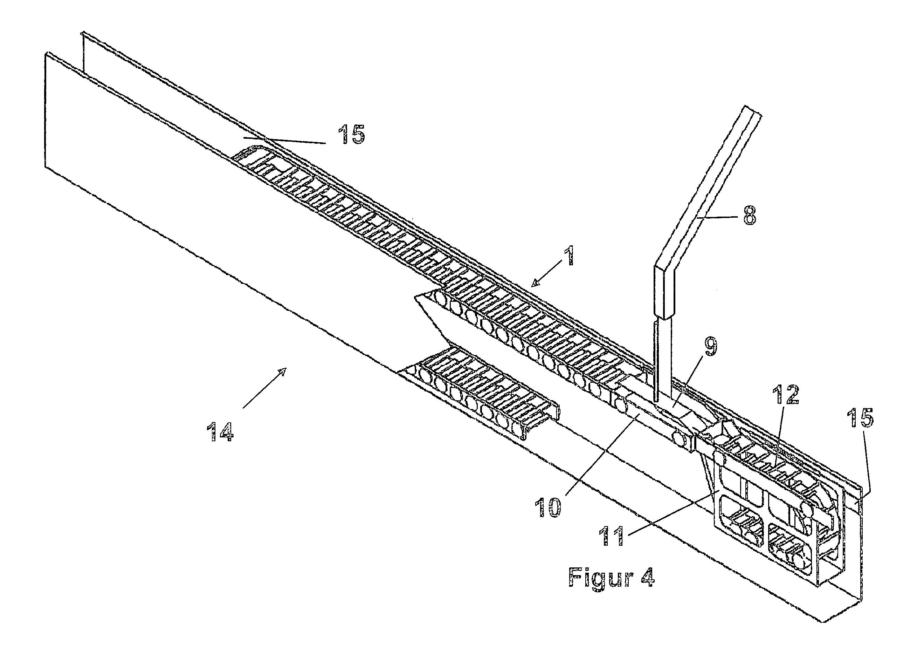

Figur 4 zeigt in einer perspektivischen Anordnung ein Ausführungsbeispiel des erfindungsgemäßen Systems. Das System entspricht der Ausgestaltung nach Figur 1. Es wird, um Wiederholungen zu vermeiden, auf die Ausführungen hinsichtlich der Figur 1 verwiesen.

Aus der Figur 4 ist ersichtlich, dass ein Führungskanal 14 vorgesehen ist, in dem die Energieführungseinheit 1 sowie der Tragwagen 10 mit Tragkorb 11 geführt werden. Der Führungskanal 14 weist in seinem oberen Bereich einen Führungsabschnitt 15 auf, in dem der Tragwagen 10 mit dem Tragkorb 11 geführt werden.

Die vorstehend genannte Bremseinrichtung kann vorzugsweise auch dann aktiviert werden, wenn die von einer Kraftmesseinrichtung aufgenommene Kraft einen vorgegebenen Grenzwert unterschreitet. Dies kann beispielsweise dann der Fall sein, wenn die Energieführungseinheit 1 bricht und hierdurch die Reibungskräfte schlagartig absinken. Um einen weiteren Schaden zu vermeiden, wird dann die Energieführungseinheit 1 mittels der nicht dargestellten Bremseinrichtung abgebremst und ein Bremsvorgang der Anlage eingeleitet.

Durch die Erfindung wird sichergestellt, dass bei einer Beeinträchtigung der Bewegung der Energieführungseinheit 1 ein koordinierter Bremsvorgang ausgelöst wird, so dass die Beschädigung des Systems und/oder der Anlage vermieden werden kann.

In dem dargestellten Ausführungsbeispielen und in der Beschreibung wird darauf hingewiesen, dass der Mitnehmer mittels einer Kopplungseinrichtung lösbar mit der Energieführungseinheit verbunden ist. Es besteht auch die Möglichkeit, dass die Kopplungseinrichtung an der Anlage angeordnet ist, so dass der Mitnehmer fest mit der Energieführungseinheit 1 verbunden bleibt. Bei einer solchen Ausgestaltung des Systems in Verbindung mit der Anlage ist die Reserve-Energieführungseinheit vorzugsweise an der Anlage angeordnet. Alternativ oder zusätzlich kann die Kopplungseinrichtung in den Mitnehmer integriert werden.

Während des Betriebes einer Energieführungseinheit kann es zu Störungen des Betriebszustandes der Energieführungseinheit kommen. Hierbei kann es sich beispielsweise um vertikale Ausschläge des Obertrums handeln. Es wird vorgeschlagen, dass entlang des Verfahrweges der Energieführungseinheit Kontaktmittel vorgesehen sind, welche in Kontakt mit der Energieführungseinheit gelangen können. Die Kontaktmittel generieren ein Signal, welches ausgewertet und in Abhängigkeit von der Auswertung eine Trennung der Energieführungseinheit von der Anlage, Maschine oder des gleichen erfolgt. Bei den Kontaktmitteln kann es sich um mechanische, elektrische, elektromagnetische oder optische Mittel handeln. Ein Trennvorgang kann dabei unabhängig von den auf die Verbindung zwischen der Energieführungseinheit und der Anlage wirkenden Kräften erfolgen. Die Kontaktmittel sind vorzugsweise in einen Führungskanal integriert. Durch eine solche Ausgestaltung wird eine Sicherheitsabschaltung verwirklicht, durch die eine Beschädigung der Energieführungseinheit und/oder der mit der Energieführungseinheit verbunden Anlage vermieden wird. Es besteht auch die Möglichkeit, dass nach einer Aktivierung wenigstens eines Kontaktmittels zunächst der Betriebszustand der Anlage und/oder der Energieführungseinheit verändert wird, bevor eine Trennung der Energieführungseinheit von der Anlage erfolgt.

Die Erfindung hat zahlreiche Vorteile. Sie ist insbesondere für Anlagen mit langen Gruppen, beziehungsweise großen Verfahrwegen geeignet, vorzugsweise für Krananlagen.

### Bezugszeichenliste

| | |
|---|---|
| 1. | Energieführungseinheit |
| 2. | ortsfester Anschluss |
| 3. | beweglicher Anschluss |
| 4. | Obertrum |
| 5. | Untertrum |
| 6. | Krümmungsbereich |
| 7. | Rollen |
| 8. | Mitnehmer |
| 9. | Kopplungseinrichtung |
| 10. | Tragwagen |
| 11. | Tragkorb |
| 12. | Reserve-Energieführungseinheit |
| 13. | Leitung |
| 14. | Führungskanal |
| 15. | Führungsabschnitt |

## Patentansprüche

1. Energieführungssystem umfassend wenigstens eine Energieführungseinheit (1), einen mit der Energieführungseinheit (1) verbundenen Mitnehmer (8), wobei der Mitnehmer (8) mittels einer Kopplungseinrichtung (9) lösbar mit der Energieführungseinheit (1) verbunden ist, **dadurch gekennzeichnet, dass** die Kopplungseinrichtung eine Löseeinheit aufweist, wobei die Verbindung in Abhängigkeit von den auf die Verbindung einwirkenden Kräften mittels der Löseeinheit, selbsttätig gelöst wird und eine Entkopplung erreicht wird, wenn eine auf die Verbindung einwirkende Kraft weinigstens einen bestimmten Grenzwert erreicht hat, ohne dass Bauteile des Systems beschädigt werden.

2. System umfassend eine Anlage mit einem verfahrbaren Bauteil und einem Energieführungssystem, wobei das Energieführungssystem wenigstens eine Energieführungseinheit (1) aufweist, die mit dem Bauteil über wenigstens einen Mitnehmer (8) verbunden ist, wobei der Mitnehmer (8) mittels einer Kopplungseinrichtung (9) lösbar mit dem Bauteil verbunden ist, **dadurch gekennzeichnet, dass** die Kopplungseinrichtung eine Löseeinheit aufweist, wobei die Verbindung in Abhängigkeit von den auf die Verbindung einwirkenden Kräften mittels der Löseeinheit, selbsttätig gelöst wird und eine Entkopplung erreicht wird, wenn eine auf die Verbindung einwirkende Kraft wenigstens einen bestimmten Grenzwert erreicht hat, ohne dass Bauteile des Systems beschädigt werden

3. System nach Anspruch 1 oder 2, **dadurch gekennzeichnet, dass** wenigstens eine Kraftmesseinrichtung vorgesehen ist.

4. System nach Anspruch 3, **dadurch gekennzeichnet, dass** die Löseeinheit und die Kraftmesseinrichtung mit einer Steuereinrichtung signaltechnisch verbunden sind.

5. System nach wenigstens einem der vorhergehenden Ansprüche 1 bis 4, **dadurch gekennzeichnet, dass** wenigstens eine Reserve-Energieführungseinheit (12) vorgesehen ist, welche mit dem Mitnehmer (8) verbunden ist.

6. System nach Anspruch 5, **dadurch gekennzeichnet, dass** die Reserve-Energieführungseinheit (12) in einem Tragkorb (11) angeordnet ist.

7. System nach Anspruch 6, **dadurch gekennzeichnet, dass** der Tragkorb (11) mit der Energieführungseinheit (1) mittelbar oder unmittelbar verbunden ist.

8. System nach Anspruch 6 oder 7, **dadurch gekennzeichnet, dass** der Tragkorb (11) mit der Kopplungseinrichtung (9) verbunden ist.

9. System nach wenigstens einem der vorhergehenden Ansprüche 1 bis 8 **dadurch gekennzeichnet, dass** wenigstens eine Bremseinrichtung vorgesehen ist, welche mit der Energieführungseinheit (1) zusammenwirkt.

10. System nach Anspruch 9, **dadurch gekennzeichnet, dass** die Bremseinrichtung mit der Kopplungseinrichtung (9) verbunden ist.

11. System nach Anspruch 9 oder 10, **dadurch gekennzeichnet, dass** die Bremseinrichtung eine elektrische oder elektromagnetische und/oder eine mechanische Bremseinrichtung ist.

12. System nach Anspruch 11, **dadurch gekennzeichnet, dass** die Bremseinrichtung mit der Steuereinrichtung signaltechnisch verbunden ist.

13. System nach wenigstens einem der vorhergehenden Ansprüche 1 bis 12, **dadurch gekennzeichnet, dass** ein Führungskanal (14) vorgesehen ist, in dem die Energieführungseinheit (1) geführt wird.

14. System nach Anspruch 13, **dadurch gekennzeichnet, dass** der Führungskanal (14) einen Führungsabschnitt (15) aufweist, mittels dessen ein Tragwagen (10) geführt wird.

## Claims

1. Power transmission system comprising at least one power transmission unit (1), a driver (8) connected to the power transmission unit (1), the driver (8) being detachably connected to the power transmission unit (1) by means of a coupling device (9), **characterized in that** the coupling device has a release unit, the connection being detached autonomously by means of the release unit, depending on the forces acting on the connection and decoupling being achieved when a force acting on the connection reaches at least a defined limit value without components of the system being damaged.

2. System comprising an item of equipment with a traversable component and a power transmission system, the power transmission system having at least one power transmission unit (1) which is connected to the component by means of at least one driver (8), the driver (8) being detachably connected to the component by means of a coupling device (9), **characterized in that** the coupling device has a release unit, the connection being detached autonomously by means of the release unit depending on the forces acting on the connection and decoupling being achieved when a force acting in connection reaches at least a defined limit value without components of the system being damaged.

3. System according to Claim 1 or 2, **characterized in that** at least one force measuring device is provided.

4. System according to Claim 3, **characterized in that** the signals of the release unit and the force measuring device are connected to a control unit.

5. System according to at least one of the preceding Claims 1 to 4, **characterized in that** at least one reserve power transmission unit (12) which is connected to the driver (8) is provided.

6. System according to Claim 5, **characterized in that** the reserve power transmission unit (12) is arranged in a supporting cage (11).

7. System according to Claim 6, **characterized in that** the supporting cage (11) is connected directly or indirectly to the power transmission unit (1).

8. System according to Claim 6 or 7, **characterized in that** the supporting cage (11) is connected to the coupling device (9).

9. System according to at least one of the preceding Claims 1 to 8, **characterized in that** at least one braking unit is provided which acts together with the power transmission unit (1).

10. System according to Claim 9, **characterized in that** the braking unit is connected to the coupling device (9).

11. System according to Claim 9 or 10, **characterized in that** the braking unit is an electrical or electromagnetic and/or a mechanical braking unit.

12. System according to Claim 11, **characterized in that** the signals of the braking unit are connected to the control unit.

13. System according to at least one of the preceding Claims 1 to 12, **characterized in that** a guide channel (14) is provided in which the power transmission unit (1) is guided.

14. System according to Claim 13, **characterized in that** the guide channel (14) has a guide section (15) by means of which a carriage (10) is guided.

## Revendications

1. Système de transfert d'énergie comportant au moins
une unité (1) de transfert d'énergie,
un entraîneur (8) raccordé à l'unité (1) de transfert d'énergie,
l'entraîneur (8) étant relié de manière libérable à l'unité (1) de transfert d'énergie au moyen d'un dispositif d'accouplement (9),
**caractérisé en ce que**
le dispositif d'accouplement présente une unité de débranchement, **en ce que** la liaison est débranchée automatiquement au moyen de l'unité de débranchement en fonction des forces qui agissent sur la liaison et
**en ce que** si une force qui agit sur la liaison a atteint au moins une valeur limite définie, un débranchement est réalisé sans que des composants du système soient endommagés.

2. Système comportant une installation qui présente un composant déplaçable et un système de transfert d'énergie, le système de transfert d'énergie présentant au moins une unité (1) de transfert d'énergie reliée au composant par au moins un entraîneur (8), l'entraîneur (8) étant relié de manière détachable au composant au moyen d'un dispositif d'accouplement (9), **caractérisé en ce que** le dispositif d'accouplement présente une unité de débranchement, **en ce que** la liaison est débranchée automatiquement au moyen de l'unité de débranchement en fonction des forces qui agissent sur la liaison et **en ce que** si une force qui agit sur la liaison a atteint au moins une valeur limite définie, un débranchement est réalisé sans que des composants du système soient endommagés.

3. Système selon les revendications 1 ou 2, **caractérisé en ce qu'**il présente au moins un dispositif de mesure de force.

4. Système selon la revendication 3, **caractérisé en ce que** l'unité de débranchement et le dispositif de mesure de force sont reliés à un dispositif de commande par une technique de transfert de signaux.

5. Système selon au moins l'une des revendications 1 à 4 qui précèdent, **caractérisé en ce qu'**il présente au moins une unité (12) de transfert d'énergie de réserve qui est reliée à l'entraîneur (8).

6. Système selon la revendication 5, **caractérisé en ce que** l'unité (12) de transfert d'énergie de réserve est disposée dans un panier de support (11).

7. Système selon la revendication 6, **caractérisé en ce que** le panier de support (11) est relié directement ou indirectement à l'unité (1) de transfert d'énergie.

8. Système selon les revendications 6 ou 7, **caractérisé en ce que** le panier de support (11) est relié au dispositif d'accouplement (9).

9. Système selon au moins l'une des revendications 1 à 8, **caractérisé en ce qu'**il présente au moins un dispositif de freinage qui coopère avec l'unité (1) de transfert d'énergie.

10. Système selon la revendication 9, **caractérisé en ce que** le dispositif de freinage est relié au dispositif d'accouplement (9).

11. Système selon les revendications 9 ou 10, **caractérisé en ce que** le dispositif de freinage est un dispositif de freinage électrique, électromagnétique et/ou mécanique.

12. Système selon la revendication 11, **caractérisé en ce que** le dispositif de freinage est relié au dispositif de commande par une technique d'échange de signaux.

13. Système selon au moins l'une des revendications 1 à 12, **caractérisé en ce qu'**il présente un canal de transfert (14) dans lequel l'unité (1) de transfert d'énergie est insérée.

14. Système selon la revendication 13, **caractérisé en ce que** le canal de transfert (14) présente une partie de transfert (15) qui guide un chariot de support (10).
